# EUROPÄISCHE PATENTSCHRIFT

(11) **EP 2 126 399 B1**
(45) Veröffentlichungstag und Bekanntmachung des Hinweises auf die Patenterteilung: **05.01.2011**
(21) Anmeldenummer: 08715953.9
(22) Anmeldetag: 22.02.2008
(51) Int. Cl.: F16D 65/12

(54) **BREMSSCHEIBEN-/NABENVERBINDUNG**
BRAKE DISK/HUB CONNECTION
CONNEXION DISQUE DE FREIN/MOYEU

(30) Priorität: 22.02.2007 DE 102007008725
(43) Veröffentlichungstag der Anmeldung: 02.12.2009
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(74) Vertreter: Mattusch, Gundula
(86) Internationale Anmeldenummer: PCT/EP2008/001402
(87) Internationale Veröffentlichungsnummer: WO 2008/101709

(56) Entgegenhaltungen:
- WO-A-2007/118665
- DE-A1- 19 726 674
- DE-B3-102005 023 380

## Beschreibung

Die Erfindung betrifft eine Bremsscheiben-/Nabenverbindung entsprechend dem Oberbegriff des Anspruchs 1.

Zur Anbindung einer Bremsscheibe an einer Nabe sowie zur Übertragung eines beim Bremsen entstehenden Bremsmoments auf die Nabe und damit auf ein angeschlossenes Fahrzeugrad, sind ineinander greifende zahnförmige Formschlussmittel bekannt, die aus am Innenumfang der Bremsscheibe vorgesehenen Abstützelementen und damit korrespondierenden, am zugeordneten Außenumfang der Nabe angeordneten Nocken bestehen. Zum Stand der Technik werden die DE 197 26 674 A1, die DE 198 07 184 C1, die DE 1 575 422 C1 und die DE 195 44 559 C1 genannt.

Zur Verbindung der Bremsscheibe mit der Nabe sind bei diesen Bremsscheiben Zwischenelemente zur Drehmoment- und Kraftübertragung von den Nocken der Nabe auf die Abstützelemente der Bremsscheibe vorgesehen, die beispielsweise durch Bolzen an den Nocken der Nabe befestigbar sind.

Dabei greifen einerseits die Nocken der Nabe in die Zwischenelemente und andererseits die Zwischenelemente in die Abstützelemente ein, so dass in beiden Drehrichtungen eine sichere Drehmomentübertragung von der Bremsscheibe auf die Nabe gewährleistet ist.

Diese Zwischenelemente ermöglichen eine Demontage der Bremsscheibe, beispielsweise zu deren Wechsel, wozu die Zwischenelemente ausgetrieben werden, so dass die Bremsscheibe leicht abnehmbar ist.

Durch die stoffliche Trennung der Bremsscheibe von der Nabe werden Rissbildungen in der Bremsscheibe weitgehend verhindert, die ansonsten durch die beim Bremsen sich entwickelnde Reibungswärme entstehen können. Die gegenüber der Nabe als separates Bauteil vorliegende Bremsscheibe hat somit die Möglichkeit, sich unter Wärmeeinfluss radial auszudehnen.

Zur axialen Sicherung der Bremsscheibe an der Nabe ist die Bremsscheibe mit Blattfederelementen gegen einen Anschlag an der Nabe verspannt. Allerdings besteht zwischen der Nabe und der Bremsscheibe, d.h. zwischen den genannten Korrespondenzteilen ein direkter Kontakt, wodurch die isolierende Wirkung der Zwischenelemente teilweise unterbrochen wird.

Wie sich gezeigt hat, erfolgt im Kontaktbereich ein deutlicher Wärmeübergang von der Bremsscheibe auf die Nabe, der überdies dadurch begünstigt wird, dass ein Lufteintritt zur Kühlung der innenbelüfteten Bremsscheibe auf der einen Seite durch den Anschlag und auf der anderen Seite durch das Federelement behindert wird.

Eine gattungsgemäße Bremsscheiben-/Nabenverbindung ist aus der DE 10 2005 023380 B3 bekannt. Darin wird vorgeschlagen, die Zwischenelemente in axial sich erstreckende Vertiefungen der benachbarten Abstützelemente und Nocken einzusetzen, so dass sie in radialer Richtung gesichert einliegen. Zur axialen Sicherung in Einschieberichtung weist jedes Zwischenelement eine Lasche auf, die beim Einschieben in die Vertiefungen einen Anschlag bildet.

In der nachveröffentlichten WO 2007/118665 A1 ist eine Bremsscheiben-/Nabenverbindung geoffenbart, deren Zwischenelemente aus Haltebügeln bestehen, die in in Umfangsrichtung der Bremsscheibe verlaufenden Nuten der Stützstege beidseitig in deren Achsrichtung gesichert einliegen.

Der Erfindung liegt die Aufgabe zugrunde, eine Bremsscheiben-/Nabenverbindung der gattungsgemäßen Art so weiterzuentwickeln, dass die Kühlung der Bremsscheibe verbessert wird.

Diese Aufgabe wird durch eine Bremsscheiben-/Nabenverbindung mit den Merkmalen des Anspruchs 1 gelöst.

Die in diesem Sinne ausgebildeten Zwischenelemente übernehmen nun im weitesten Sinne Tragefunktion für die Bremsscheibe, so dass kein direkter Kontakt zwischen der Bremsscheibe und der Nabe besteht.

Ein kontaktbedingter Wärmeübergang zwischen der Bremsscheibe und der Nabe, wie beim Stand der Technik, ist nun weitgehend unterbunden, wodurch sich naturgemäß eine reduzierte Belastung der Nabe ergibt.

Andererseits ist durch den erfindungsgemäß vorgesehenen Stützsteg, eine deutlich verbesserte Belüftung der Bremsscheibe erreicht, da der Lufteintrittsquerschnitt relativ groß gehalten werden kann.

Ein weiterer Vorteil der Erfindung liegt darin, dass die Bremsscheibe zusammen mit den Zwischenelementen vormontiert werden kann und von der freien Stirnseite der Stützstege her auf die Nabe aufgesteckt wird, bis die Zwischenelemente an der jeweiligen Schulter der Stützstege zur Anlage kommen.

Dabei sind die Zwischenelemente, die als Drahtbügel oder als Sinterteil ausgebildet sein können, C-förmig gestaltet, wobei sich an die jeweiligen kürzeren freien Schenkel jeweils ein, bezogen auf die Mittelachse der Nabe axial erstreckender Arretierstift anschließt, der in einer seitlichen Aufnahme des Stützsteges einerseits und des Abstützelementes der Bremsscheibe andererseits einliegt, während der längere sozusagen Verbindungsschenkel des C-förmigen Zwischenelementes an der der Nabe abgewandten Oberseite des jeweiligen Stützsteges sowie an dessen Schulter anliegt.

Die Fixierung der Bremsscheibe auf der den Zwischenelementen abgewandten Seite erfolgt in an sich bekannter Weise durch Blattfedern, die an den Stützstegen bzw. den Nocken der Nabe befestigt sind und die andererseits die Abstützelemente der Bremsscheibe so weit überdecken, dass die axiale Sicherung auch bei einer Rüttelbelastung gewährleistet ist.

Anstelle dieser Blattfedern kann auch ein mit der Nabe verbundener, vorzugsweise zweiteiliger Anschlag vorgesehen sein, der sich an den Abstützelementen der Bremsscheibe abstützt.

Um die Wärmeübertragung durch die Arretierstifte der Zwischenelemente zu minimieren, sind diese vorzugsweise aus einem gering wärmeleitenden Material hergestellt, beispielsweise aus einem rostfreien Stahl. Dabei können die Arretierstifte der Zwischenelemente direkt an den Stützstegen einerseits und den Abstützelementen der Bremsscheibe andererseits anliegen. Denkbar ist aber auch, auf die Arretierstifte Hülsen aufzustecken, die aus einem geeigneten, gering wärmeleitfähigen Material bestehen.

Diese Hülsen können formschlüssig, beispielsweise durch Verstemmen, stoffschlüssig, z.B. durch Schweißen, oder reibschlüssig, durch Pressen befestigt sein. Denkbar ist aber auch, die Hülsen lediglich aufzustecken, ohne diese an den zugeordneten Arretierstiften zu fixieren.

Wenn dann sowohl die Hülsen wie auch die Zwischenelemente, also der Drahtbügel insgesamt, aus Edelstahl sind, könnte bei einem notwendigen Wechsel der Bremsscheibe diese leichter abgezogen werden, da möglicherweise in den Aufnahmen der Abstützelemente der Bremsscheibe durch Korrosion festgesetzte Hülsen ohne weiteres von den Arretierstiften mit abgezogen werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Bremsscheibe an eine Nabe in einer Vorderansicht
- Figur 2: einen Längsschnitt durch die Bremsscheibe/Nabe entsprechend der Figur 1
- Figur 3: einen Teilausschnitt der Bremsscheibe/Nabe in einer Rückan- sicht

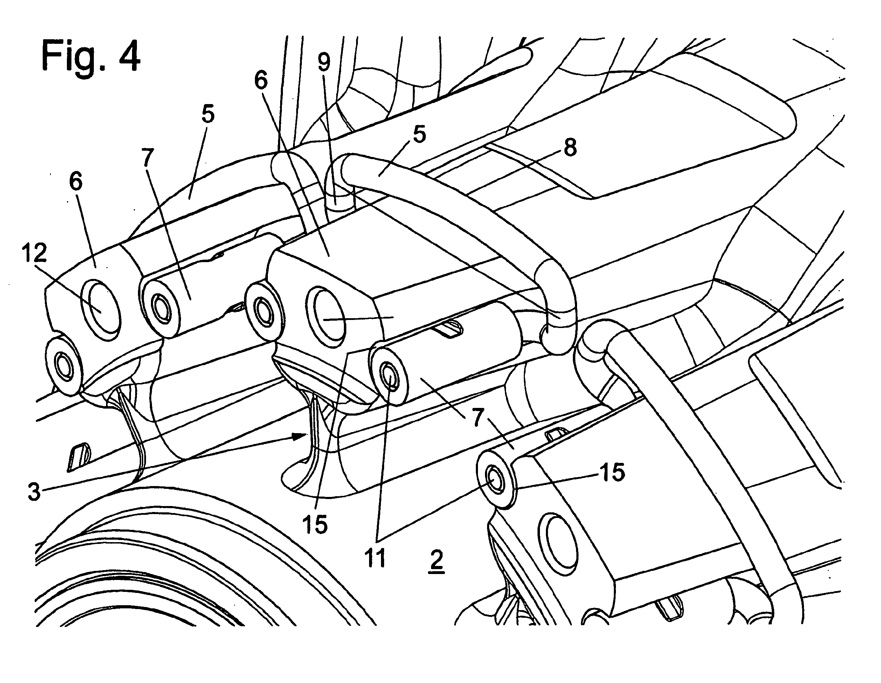

- Figur 4: einen Teilausschnitt der Nabe in einer perspektivischen Vorder- ansicht

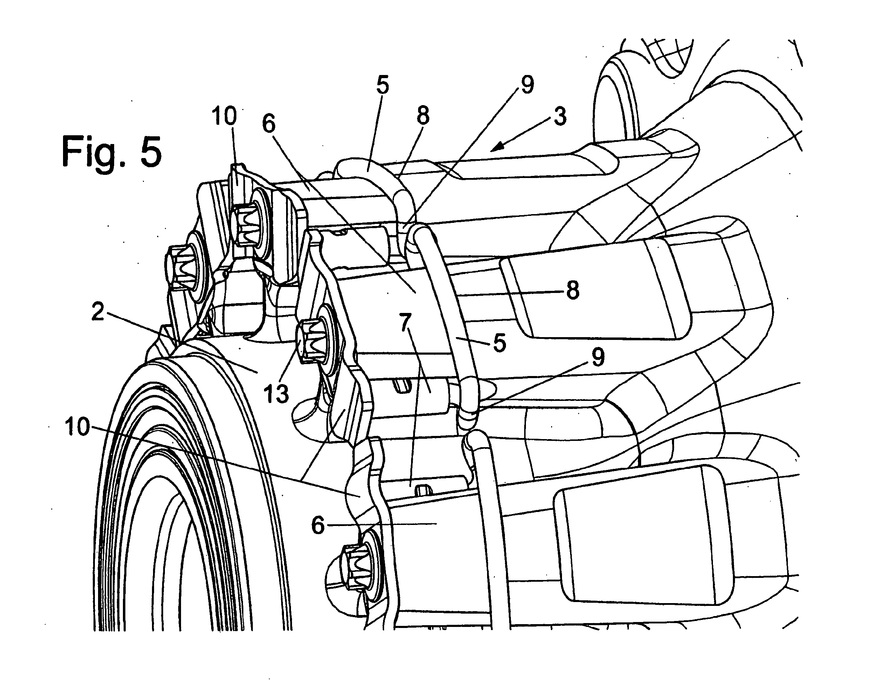

- Figur 5: in einer perspektivischen Ansicht die Nabe in einem weiteren Teilausschnitt
- Figuren 6 und 7: jeweils eine Einzelheit der erfindungsgemäßen Bremsscheiben- /Nabenverbindung in einer perspektivischen Ansicht
- Figuren 8 und 9: jeweils ein weiteres Ausführungsbeispiel einer Einzelheit der Bremsscheiben-/Nabenverbindung in einer perspektivischen Ansicht.

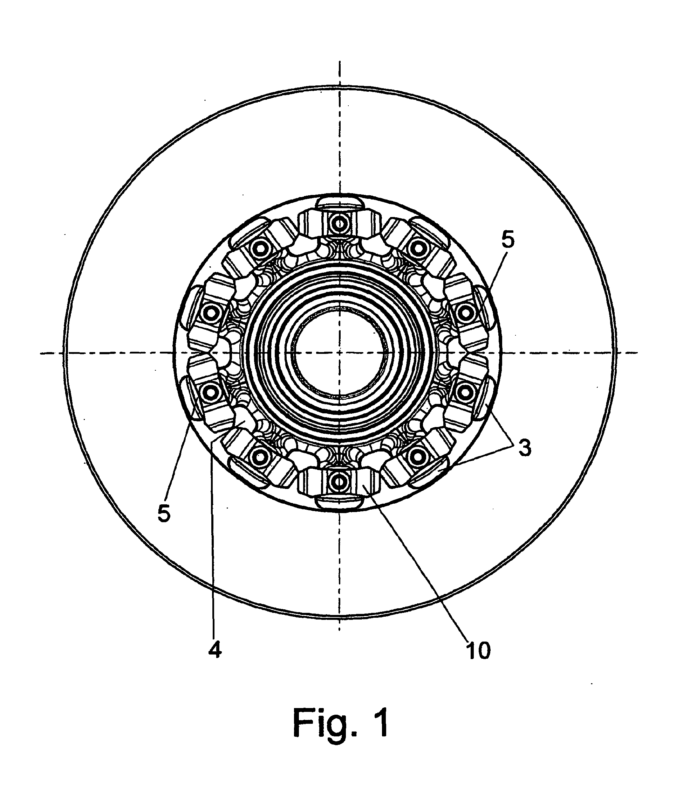

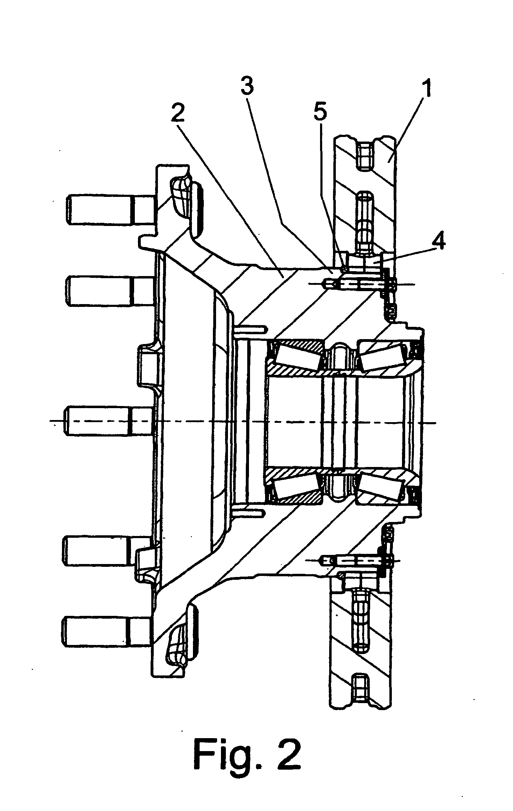

In den Figuren 1 und 2 ist eine an einem hohlzylindrischen Abschnitt einer Nabe 2 mittels einer Bremsscheiben-/Nabenverbindung festgelegte, innenbelüftete Bremsscheibe 1 erkennbar, die an ihrem Innenumfang gleichmäßig verteilte, im Sinne von Zähnen radial sich erstreckende Abstützelemente 4 aufweist, während in die gebildeten Zwischenräume Nocken 6 von Stützstegen 3 eingreifen, die am äußeren Umfang der Nabe 2 angeformt sind und die der verdrehsicheren Halterung der Bremsscheibe 1 dienen.

Zur Drehmomentenübertragung sind zwischen den Nocken 6, die im Überdeckungsbereich mit der Bremsscheibe 1 ausgeformt sind, und den zugeordneten Abstützelementen 4 der Bremsscheibe 1 Zwischenelemente 5 vorgesehen, die erfindungsgemäß als Drahtbügel ausgebildet sind und von der freien Stirnseite der Nocken 6 her auf die Stützstege 3 bzw. die Nocken 6 aufgeschoben sind, bis sie an einer Schulter 8 des Stützsteges 3 anschlagen, der das Ende des Nockens 6 definiert.

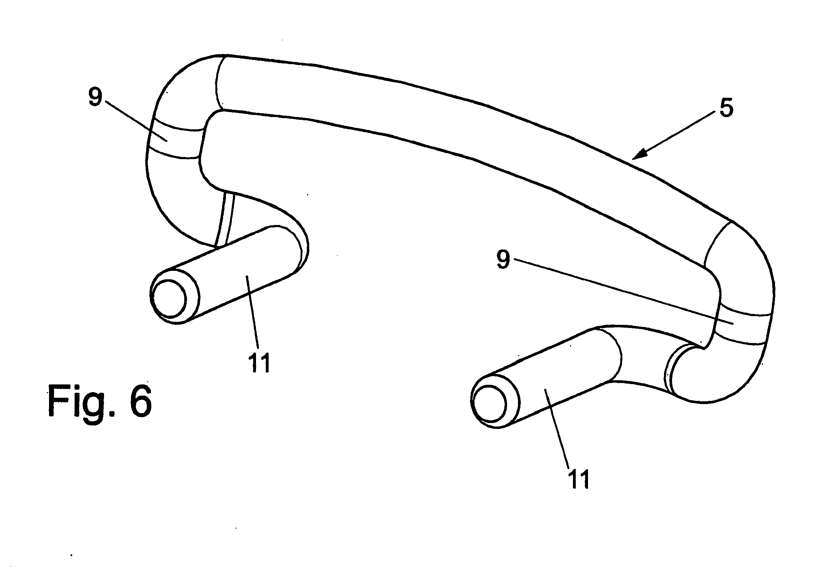

Jedes Zwischenelement 5 ist, wie besonders deutlich in der Figur 6 zu erkennen ist, im Wesentlichen C-förmig ausgebildet, wobei sich an die kurzen Schenkel jeweils ein Arretierstift 11 anschließt, die parallel und abständig zueinander verlaufen und in Längsachsrichtung der Nabe 2 ausgerichtet sind.

Während der die beiden kurzen Schenkel 9 des jeweiligen Zwischenelementes 5 verbindende längere Schenkel an der Schulter 8 anliegt, sind die beiden Arretierstifte 11 in schalen- bzw. halbkreisförmigen Ausnehmungen 14, 15 der Abstützelemente 4 und der Nocken 6 gelagert, die sich jeweils entsprechend der Ausrichtung der Arretierstifte 11 erstrecken.

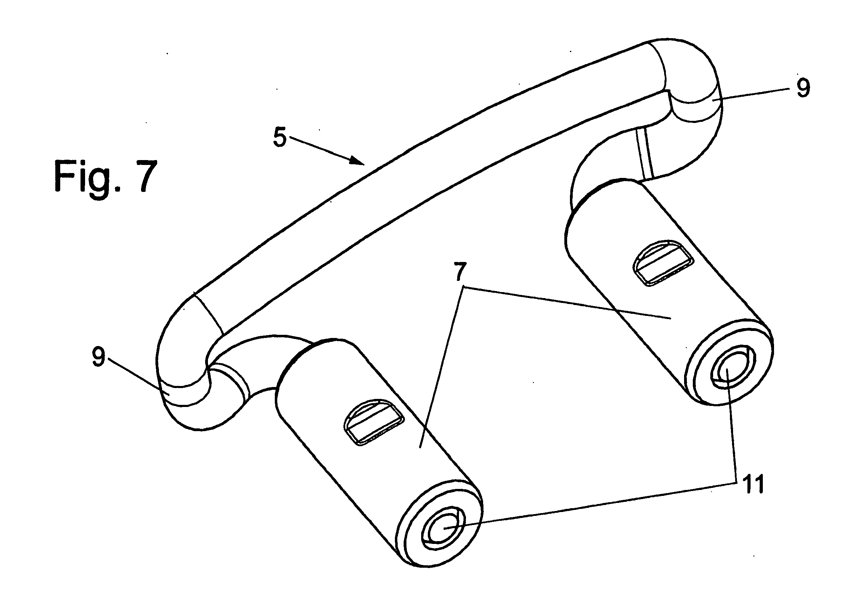

Im Ausführungsbeispiel sind auf die Arretierstifte 11 Hülsen 7 aufgesteckt (Figur 7), die in den Ausnehmungen 14, 15 einliegen und sozusagen eine Zwischenwand bilden, mit der eine Wärmeübertragung von der Bremsscheibe 1 auf das Zwischenelement 5 minimiert werden kann, wenn ein entsprechendes Material mit geringer Wärmeleitfähigkeit verwendet wird.

Zur Verschiebesicherung der Zwischenelemente 5 und der Bremsscheibe 1 sind Blattfedern 10 vorgesehen, die auf den der Bremsscheibe 1 zugewandten Stirnseiten der Nocken 6 durch Schrauben 13 befestigt sind, die in stirnseitige Gewindebohrungen 12 der Nocken 6 eingedreht sind.

Dabei überdecken die Blattfedern 10, die seitlich sich erstreckende Flügel aufweisen, sowohl die Arretierstifte 11 und im Ausführungsbeispiel die Stirnseiten der Hülsen 7 wie auch die Abstützelemente 4 der Bremsscheibe 1 zumindest teilweise.

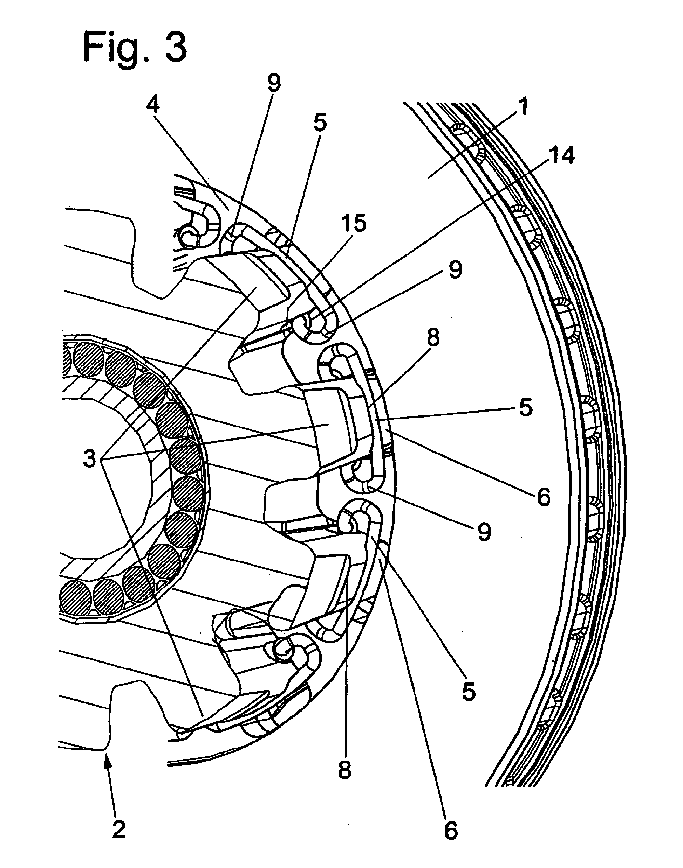

Wie insbesondere die Figur 3 sehr deutlich zeigt, ragt der die beiden kurzen Schenkel 9 des jeweiligen Zwischenelementes 5 verbindende längere Schenkel seitlich über die Schulter 8 bzw. den Stützsteg 3 hinaus, so dass die Bremsscheibe mit ihren zugeordneten Abstützelementen 4 in diesen Bereichen zur Anlage kommt.

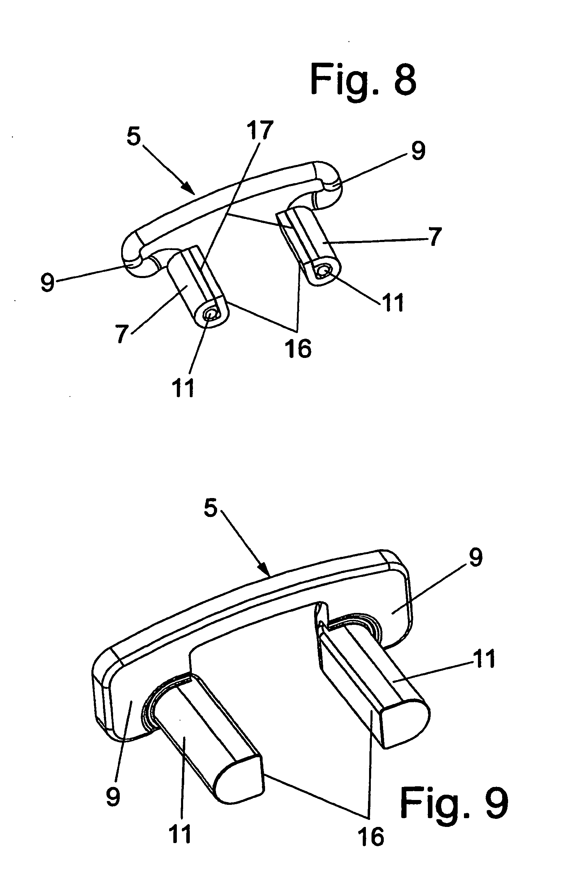

In den Figuren 8 und 9 sind jeweils weitere Ausführungsbeispiele der Erfindung dargestellt, wobei die Figur 8 ein Zwischenelement 5 zeigt, das ebenfalls als Drahtbügel ausgebildet ist und mit Hülsen 7 bestückt ist, die auf ihren einander zugewandten Seiten jeweils eine Abflachung 16 aufweisen, die parallel zueinander verlaufen.

Diese Abflachungen 16 liegen in den daran angepassten Ausnehmungen 15 der Nocken 6 ein, so dass sich in diesem Bereich eine flächige Anlage ergibt, mit einer Minimierung der Flächenpressung zwischen den Nocken 6 und den Hülsen 7.

Die jeweilige, vorzugsweise aus einem um ihre Längsache gebogenen Blech gebildete Hülse 7 weist einen sich in Längsrichtung erstreckenden durchgehenden Spalt 17 auf, durch den ein federnder Toleranzausgleich gegeben ist.

Die erwähnte Minimierung der Flächenpressung ist auch bei einem Einsatz des in der Figur 9 gezeigten Zwischenstücks 5 gegeben, das als Sinterteil ausgebildet ist, bei dem die Arretierstifte 11 einstückig mit dem jeweils zugeordneten Schenkel 9 verbunden sind.

Diese Schenkel weisen, vergleichbar den Hülsen 7 in der Figur 8, auf den einander zugewandten Längsseiten Abflachungen 16 auf, die formgerecht in den Ausnehmungen 15 der Nocken 6 einliegen.

### Bezugszeichenliste

- 1: Bremsscheibe
- 2: Nabe
- 3: Stützsteg
- 4: Abstützelement
- 5: Zwischenelement
- 6: Nocken
- 7: Hülse
- 8: Schulter
- 9: Schenkel
- 10: Blattfeder
- 11: Arretierstift
- 12: Gewindebohrung
- 13: Schraube
- 14: Ausnehmung
- 15: Ausnehmung
- 16: Abflachung
- 17: Spalt

## Patentansprüche

1. Bremsscheiben-/Nabenverbindung zur Verbindung einer innenbelüfteten Bremsscheibe (1) mit einer einen hohlzylindrischen Abschnitt aufweisenden Nabe (2), mit folgenden Merkmalen:
a) die Bremsscheibe (1) weist am inneren Umfang Abstützelemente (4) auf,
b) die Nabe (2) ist am äußeren Umfang ihres hohlzylindrischen Abschnitts mit Nocken (6) versehen, die in Umfangsrichtung zur Verdrehsicherung der Bremsscheibe (1) zwischen die Abstützelemente (4) greifen,
c) zwischen den Nocken (6) und den zugeordneten Abstützelementen (4) sind zur Drehmomentenübertragung Zwischenelemente (5) vorgesehen,
**dadurch gekennzeichnet, dass** die Zwischenelemente (5) als Bügel ausgebildet sind, die auf zugeordnete, am hohlzylindrischen Abschnitt der Nabe (2) vorgesehene Stützstege (3) in axialer Richtung aufgeschoben sind und an an den im Überdeckungsbereich mit der Bremsscheibe (1) die Nocken (6) bildenden Stützstegen (3) vorgesehenen, jeweils einen gegenüber dem Nocken (6) erhabenen, abgestuften Anschlag bildenden Schultern (8) in Aufschieberichtung axial gesichert anliegen.

2. Bremsscheiben-/Nabenverbindung nach Anspruch 1, **dadurch gekennzeichnet, dass** die Zwischenelemente (5) als Drahtbügel ausgebildet sind.

3. Bremsscheiben-/Nabenverbindung nach Anspruch 1 oder 2, **dadurch gekennzeichnet, dass** die Zwischenelemente (5) aus einem Sintermaterial bestehen.

4. Bremsscheiben-/Nabenverbindung nach Anspruch 1, **dadurch gekennzeichnet, dass** die Zwischenelemente (5) C-förmig geformt sind, wobei ein die beiden kürzeren Schenkel (9) miteinander verbindender längerer Schenkel an der Schulter (8) anliegt.

5. Bremsscheiben-/Nabenverbindung nach Anspruch 1 oder 2, **dadurch gekennzeichnet, dass** sich an jeden radial verlaufenden kürzeren Schenkel (9) ein, bezogen auf die Nabe (2), axial erstreckender Arretierstift (11) anschließt, der in einer Ausnehmung (14) des zugeordneten Abstützelementes (4) und einer Ausnehmung (15) des Nockens (6) einliegt.

6. Bremsscheiben-/Nabenverbindung nach Anspruch 5, **dadurch gekennzeichnet, dass** auf jeden Arretierstift (11) eine Hülse (7) aufgesteckt ist.

7. Bremsscheiben-/Nabenverbindung nach einem der Ansprüche 5 oder 6, **dadurch gekennzeichnet, dass** die Arretierstifte (11) oder die Hülsen (7) jedes Zwischenelementes (5) auf ihren einander zugewandten Seiten mit Abflachungen (16) versehen sind.

8. Bremsscheiben-/Nabenverbindung nach einem der Ansprüche 6 oder 7, **dadurch gekennzeichnet, dass** die Hülsen (7) jeweils einen sich in Längsachsrichtung erstreckenden durchgehenden Spalt (17) aufweisen.

9. Bremsscheiben-/Nabenverbindung nach einem der Ansprüche 5 bis 8, **dadurch gekennzeichnet, dass** die Ausnehmungen (14, 15) der Querschnittskontur und Länge der Arretierstifte (11) bzw. der Hülsen (7) angepasst sind.

10. Bremsscheiben-/Nabenverbindung nach einem der Ansprüche 6 bis 9, **dadurch gekennzeichnet, dass** jedes Zwischenelement (5) und/oder die Hülse (7) aus einem Material mit geringer Wärmeleitfähigkeit hergestellt sind.

11. Bremsscheiben-/Nabenverbindung nach einem der Ansprüche 6 bis 10, **dadurch gekennzeichnet, dass** das Zwischenelement (5) und/oder die Hülse (7) aus einem rostfreien Stahl bestehen.

12. Bremsscheiben-/Nabenverbindung nach einem der Ansprüche 6 bis 11, **dadurch gekennzeichnet, dass** die Hülse (7) mit dem Arretierstift (11) form-, stoff- oder reibschlüssig verbunden ist.

13. Bremsscheiben-/Nabenverbindung nach einem der Ansprüche 4 bis 12, **dadurch gekennzeichnet, dass** der die kürzeren Schenkel (9) miteinander verbindende längere Schenkel des Zwischenelementes (5) sowie die kürzeren Schenkel (9) beidseitig über den Nocken (6) vorstehen.

14. Bremsscheiben-/Nabenverbindung nach einem der vorhergehenden Ansprüche 6 bis 13, **dadurch gekennzeichnet, dass** an jedem Nocken (6) ein Anschlagelement befestigt ist, das dem Zwischenelement (5) gegenüberliegend an den Arretierstiften (11) oder den Hülsen (7) sowie bereichsweise an den Abstützelementen (4) der Bremsscheibe (1) anliegen.

15. Bremsscheiben-/Nabenverbindung nach Anspruch 14, **dadurch gekennzeichnet, dass** das Anschagelement als Blattfeder (10) ausgebildet ist.

16. Bremsscheiben-/Nabenverbindung nach Anspruch 15, **dadurch gekennzeichnet, dass** die Blattfeder (10) an der der Bremsscheibe (1) zugewandten freien Stirnseite des Nocken (6) befestigt ist.

17. Bremsscheiben-/Nabenverbindung nach einem der Ansprüche 15 oder 16, **dadurch gekennzeichnet, dass** die Blattfeder (10) beidseitig sich erstreckende Flügel aufweist, die die zugeordneten Abstützelemente (4) der Bremsscheibe (1) teilweise überdecken.

18. Bremsscheiben-/Nabenverbindung nach einem der vorhergehenden Ansprüche, **dadurch gekennzeichnet, dass** die Bremsscheibe (1) und die Zwischenelemente (5) als vormontierte Baueinheit auf die Stützelemente (3) aufgeschoben sind.

## Claims

1. Brake disc/hub connection for connecting a ventilated brake disk (1) to a hub (2) having a hollow-cylindrical section, comprising the following features:
a) the brake disc (1) has support elements (4) on its inner circumference,
b) the outer circumference of the hollow-cylindrical section of the hub (2) is provided with cams (6) which engage the support elements (4) in the circumferential direction to secure the brake disc (1) against rotation,
c) intermediate elements (5) for torque transmission are provided between the cams (6) and the associated support elements (4)
**characterised in that** the intermediate elements (5) are designed as bows which are pushed in the axial direction onto associated support webs (3) provided on the hollow-cylindrical section of the hub (2) and which are axially secured in the push-on direction on shoulders (8) forming stepped stops raised relative to the cams (6), which are provided on the support webs (3) forming the cams (6) in the overlap region with the brake disc (1).

2. Brake disc/hub connection according to claim 1, **characterised in that** the intermediate elements (5) are designed as wire clips.

3. Brake disc/hub connection according to claim 1 or 2, **characterised in that** the intermediate elements (5) are made of a sintered material.

4. Brake disc/hub connection according to claim 1, **characterised in that** the intermediate elements (5) are C-shaped, wherein a longer leg connecting the two shorter legs (9) to each other bears against the shoulder (8).

5. Brake disc/hub connection according to claim 1 or 2, **characterised in that** each radially oriented shorter leg (9) is adjoined by a locking pin (11) extending in the axial direction with respect to the hub (2), which engages a recess (14) of the associated support element (4) and a recess (15) of the cam (6).

6. Brake disc/hub connection according to claim 5, **characterised in that** a sleeve (7) is pushed onto each locking pin (11).

7. Brake disc/hub connection according to claim 5 or 6, **characterised in that** the locking pins (11) or the sleeves (7) of each intermediate element (5) are provided with flats (16) on their facing sides.

8. Brake disc/hub connection according to claim 6 or 7, **characterised in that** each of the sleeves (7) has a continuous gap (17) extending in the longitudinal direction.

9. Brake disc/hub connection according to any of claims 5 to 8, **characterised in that** the recesses (14, 15) are matched to the cross-sectional contour and length of the locking pins (11) or the sleeves (7).

10. Brake disc/hub connection according to any of claims 6 to 9, **characterised in that** each intermediate element (5) and/or the sleeve (7) is/are made of a material having a low thermal conductivity.

11. Brake disc/hub connection according to any of claims 6 to 10, **characterised in that** the intermediate element (5) and/or the sleeve (7) is/are made of a stainless steel.

12. Brake disc/hub connection according to any of claims 6 to 11, **characterised in that** the sleeve (7) is joined to the locking pin positively, non-positively or by adhesive force.

13. Brake disc/hub connection according to any of claims 4 to 12, **characterised in that** the longer leg of the intermediate element (5) which connects the shorter legs (9) to each other as well as the shorter legs (6) project beyond the cam (6) on both sides.

14. Brake disc/hub connection according to any of claims 6 to 13, **characterised in that** each cam (6) is fitted with a stop element which, opposite the intermediate element (5), bears against the locking pins (11) or the sleeves (7) and in parts against the support elements (4) of the brake disc (1).

15. Brake disc/hub connection according to claim 14, **characterised in that** the stop element is designed as a leaf spring (10).

16. Brake disc/hub connection according to claim 15, **characterised in that** the leaf spring (10) is attached to the free end face of the cam (6) which faces the brake disc (1).

17. Brake disc/hub connection according to claim 15 or 16, **characterised in that** the leaf spring (10) has wings extending on both sides which partially cover the associated support elements (4) of the brake disc (1).

18. Brake disc/hub connection according to any of the preceding claims, **characterised in that** the brake disc (1) and the intermediate elements (5) are pushed onto the support elements (3) as a pre-assembled unit.

## Revendications

1. Liaison disque de frein/moyeu, pour relier un disque (1) de frein ventilé intérieurement à un moyeu (2) ayant une partie cylindrique creuse, ayant les caractéristiques suivantes :
a) le disque (1) de frein a sur le pourtour intérieur des éléments (4) d'appui,
b) le moyeu (2) est pourvu sur le pourtour extérieur de sa partie cylindrique creuse de parties (6) saillantes, qui, dans la direction périphérique, pénètrent entre les éléments (4) d'appui pour empêcher la torsion du disque (1) de frein, c) des éléments (5) intermédiaires pour la transmission du couple de rotation sont prévus entre les parties (6) saillantes et les éléments (4) d'appui associés,
**caractérisée en ce que** les éléments (5) intermédiaires sont constitués en étriers, qui sont enfilés dans la direction axiale sur des barrettes (3) d'appui associées prévues sur la partie cylindrique creuse du moyeu (2), et s'appliquent, de manière à être bloqués axialement dans la direction d'enfilage, sur des épaulements (8) prévus sur les barrettes (3) d'appui formant les parties (6) saillantes dans la région de recouvrement avec le disque (1) de frein et formant respectivement une butée étagée en saillie par rapport à la partie (6) saillante.

2. Liaison disque de frein/moyeu suivant la revendication 1, **caractérisée en ce que** les éléments (5) intermédiaires sont constitués sous la forme d'étriers en fil métallique.

3. Liaison disque de frein/moyeu suivant la revendication 1 ou 2, **caractérisée en ce que** les éléments (5) intermédiaires sont en matériau fritté.

4. Liaison disque de frein/moyeu suivant la revendication 1, **caractérisée en ce que** les éléments (5) intermédiaires sont en forme de C, les deux branches plus longues retenant entre elles les deux branches (9) plus courtes s'appliquant à l'épaulement (8).

5. Liaison disque de frein/moyeu suivant la revendication 1 ou 2, **caractérisée en ce qu'**à chaque branche plus courte s'étendant radialement se raccorde une broche (11) d'arrêt s'étendant axialement, rapporté au moyeu (2), broche qui pénètre dans un évidement (14) de l'élément (4) d'appui associé et dans un évidement (15) de la partie (6) saillante.

6. Liaison disque de frein/moyeu suivant la revendication 5, **caractérisée en ce qu'**un manchon (7) est enfilé sur chaque broche (11) d'arrêt.

7. Liaison disque de frein/moyeu suivant la revendication 5 ou 6, **caractérisée en ce que** les broches (11) d'arrêt ou les manchons (7) de chaque élément (5) intermédiaire sont pourvus de méplats (16) sur leurs côtés tournés l'un vers l'autre.

8. Liaison disque de frein/moyeu suivant la revendication 6 ou 7, **caractérisée en ce que** les manchons (7) ont respectivement une forme (17) continue s'étendant dans la direction de l'axe longitudinal.

9. Liaison disque de frein/moyeu suivant l'une des revendications 5 à 8, **caractérisée en ce que** les évidements (14, 15) sont adaptés au contour de la section transversale et à la longueur des broches (11) d'arrêt ou des manchons (7).

10. Liaison disque de frein/moyeu suivant l'une des revendications 6 à 9, **caractérisée en ce que** chaque élément (5) intermédiaire et/ou le manchon (7) sont en un matériau ayant une petite conductivité thermique.

11. Liaison disque de frein/moyeu suivant l'une des revendications 6 à 10, **caractérisée en ce que** l'élément (5) intermédiaire et/ou le manchon (7) sont en acier inoxydable.

12. Liaison disque de frein/moyeu suivant l'une des revendications 6 à 11, **caractérisée en ce que** le manchon (7) est relié à complémentarité de forme, à complémentarité de matière ou à friction à la broche (11) d'arrêt.

13. Liaison disque de frein/moyeu suivant l'une des revendications 4 à 12, **caractérisée en ce que** la branche plus longue, reliant les branches (9) plus courtes entre elles, de l'élément (5) intermédiaire, ainsi que les branches (9) les plus courtes dépassent des deux côtés de la partie (6) saillante.

14. Liaison disque de frein/moyeu suivant l'une des revendications précédentes 6 à 13, **caractérisée en ce qu'**à chaque partie (6) saillante est fixé un élément de butée, qui, en étant opposé à l'élément (5) intermédiaire, s'applique aux broches (11) d'arrêt ou aux manchons (7) ainsi que par endroit aux éléments (4) d'appui du disque (1) de frein.

15. Liaison disque de frein/moyeu suivant la revendication 14, **caractérisée en ce que** l'élément de butée est constitué sous la forme d'un ressort (10) à lame.

16. Liaison disque de frein/moyeu suivant la revendication 15, **caractérisée en ce que** le ressort (10) à lame est fixé au côté frontal libre de la partie (6) saillante, qui est tourné vers le disque (1) de frein.

17. Liaison disque de frein/moyeu suivant l'une des revendications 15 ou 16, **caractérisée en ce que** le ressort (10) à lame comporte des ailes, qui s'étendent des deux côtés et qui recouvrent en partie les éléments (4) d'appui associés du disque (1) de frein.

18. Liaison disque de frein/moyeu suivant l'une des revendications précédentes, **caractérisée en ce que** le disque (1) de frein et les éléments (5) intermédiaires sont enfilés en tant qu'unité de construction prémontée sur les éléments (3) d'appui.
